(19) Europäisches Patentamt
European Patent Office
Office européen des brevets

(11) **EP 1 732 854 B1**

(12) **FASCICULE DE BREVET EUROPEEN**

(45) Date de publication et mention
de la délivrance du brevet:
**23.12.2009  Bulletin 2009/52**

(51) Int Cl.:
***C03C 3/087*** *(2006.01)*    ***C03C 4/02*** *(2006.01)*
***C03C 4/08*** *(2006.01)*

(21) Numéro de dépôt: **05742623.1**

(22) Date de dépôt: **21.03.2005**

(86) Numéro de dépôt international:
**PCT/FR2005/000697**

(87) Numéro de publication internationale:
**WO 2005/095297 (13.10.2005 Gazette 2005/41)**

(54) **COMPOSITION DE VERRE SILICO-SODO-CALCIQUE GRIS FONCE DESTINEE A LA FABRICATION DE VITRAGES**

DUNKELGRAUE KALKNATRONSILIKATGLASZUSAMMENSETZUNG ZUR HERSTELLUNG VON VERGLASUNGEN

DARK GREY SODA-LIME-SILICA GLASS COMPOSITION WHICH IS INTENDED FOR THE PRODUCTION OF GLAZING

(84) Etats contractants désignés:
**AT BE BG CH CY CZ DE DK EE ES FI FR GB GR HU IE IS IT LI LT LU MC NL PL PT RO SE SI SK TR**

(30) Priorité: **19.03.2004  FR 0402898**

(43) Date de publication de la demande:
**20.12.2006  Bulletin 2006/51**

(73) Titulaire: **SAINT-GOBAIN GLASS FRANCE**
**92400 Courbevoie (FR)**

(72) Inventeurs:
• **TEYSSEDRE, Laurent**
**F-75013 Paris (FR)**
• **HOMO, Lionel**
**F-60580 Coye la Foret (FR)**

(74) Mandataire: **Jamet, Vincent et al**
**Saint-Gobain Recherche**
**Propriété Industrielle**
**39 Quai Lucien Lefranc**
**93300 Aubervilliers (FR)**

(56) Documents cités:
**EP-A- 0 842 906    EP-A- 0 849 233**

• **PATENT ABSTRACTS OF JAPAN vol. 2000, no. 16, 8 mai 2001 (2001-05-08) -& JP 2001 019471 A (CENTRAL GLASS CO LTD), 23 janvier 2001 (2001-01-23)**

**Description**

L'invention se rapporte à une composition de verre silico-sodo-calcique de couleur gris foncé, en particulier pour la production de verres plats par flottage sur un bain de métal fondu, ces verres étant destinés à former des vitrages pour l'automobile et le bâtiment. Bien que plus particulièrement décrite en référence à des applications pour l'automobile, l'invention n'est cependant pas limitée à ce domaine.

Les vitrages destinés à l'industrie automobile sont soumis à différentes exigences, notamment en ce qui concerne leurs propriétés optiques ; ces exigences sont régies par voie de réglementation, par exemple lorsqu'il s'agit de la transmission lumineuse d'un pare-brise, ou bien émanent des constructeurs automobiles, par exemple lorsqu'elles visent à imposer une couleur particulière - pour des raisons esthétiques - ou des valeurs de la transmission énergétique dans un souci d'amélioration du confort des passagers.

Les vitrages qui garnissent la partie arrière (vitrages latéraux et lunette) ou le toit d'une automobile doivent notamment répondre aux exigences suivantes : avoir une couleur grise esthétiquement plaisante car assurant un bon rendu des couleurs à travers le vitrage, et posséder des propriétés protectrices vis à vis du rayonnement solaire, à savoir une faible transmission énergétique, notamment au regard des radiations infrarouges, afin d'éviter l'effet de serre à l'intérieur de l'habitacle et une transmission lumineuse modérée (inférieure à environ 50 %) de manière à procurer un sentiment d'intimité aux usagers. Le plus souvent, ces vitrages présentent aussi une faible transmission des radiations ultraviolettes pour éviter la dégradation de la garniture intérieure. Ces verres sont aussi dénommés verres « privacy ».

Les vitrages en verre silico-sodo-calcique pour l'automobile sont en général fabriqués dans les conditions du procédé « float » opérant par flottage du verre en fusion sur un bain de métal fondu, le plus souvent de l'étain, pour former un ruban qui est ensuite découpé sous forme de feuilles de verre. Ces feuilles peuvent ultérieurement être bombées ou subir un traitement visant à renforcer les propriétés mécaniques du verre, par exemple une trempe thermique.

Le niveau de coloration et les performances indiquées plus haut sont atteintes par l'adjonction d'agents colorants dans les matières premières destinées à être fondues pour réaliser la matrice verrière silico-sodo-calcique. De nombreuses combinaisons associant un nombre plus ou moins élevé d'agents colorants ont été proposés pour produire des verres gris « privacy ».

Des verres comprenant du fer, du cobalt, du nickel et du sélénium sont décrits dans EP-A-947 476, EP-A-1 020 414 et EP-A-1 125 899. La quantité de sélénium dans le verre varie de 0,0008 à 0,0050 %.

Néanmoins, ces verres ne sont pas souhaités du fait de la présence de sélénium en quantité importante et des inconvénients qui en découlent.

Tout d'abord, il est connu que le sélénium existe dans le verre sous plusieurs degrés d'oxydation stables dont certains lui confèrent une coloration particulière (rose, rouge ou ambre plus ou moins intense). De plus, la couleur finale dépend de la nature des autres colorants présents dans le verre avec lesquels le sélénium est susceptible de se combiner : par exemple $Se^{2-}$ forme avec les ions ferriques un chromophore conférant une coloration brun-rouge au verre. La maîtrise de la teinte impose donc un contrôle très précis du redox dans un domaine de valeurs relativement étroit.

Ensuite, la température qui règne à l'intérieur du four où s'opère la fusion du mélange vitrifiable est très supérieure à la température de vaporisation du sélénium. Il s'ensuit que la majeure partie du sélénium (environ 90 %) se retrouve dans l'atmosphère du four ce qui nécessite d'équiper les cheminées avec des électro-filtres pour retenir le sélénium présent dans les fumées et les poussières. Au coût déjà très élevé de ces dispositifs de filtration s'ajoute le problème du recyclage des poussières retenues par les filtres dont seulement une partie peut être réintroduite dans le four.

Enfin, le sélénium présente une toxicité élevée même à faible concentration, ce qui impose des mesures particulières pour pouvoir le manipuler.

D'autres verres ont été proposés qui combinent du fer, du cobalt, du nickel et du titane, en remplacement de tout ou partie du sélénium (voir EP-A 842 906, EP-A-849233 et JP-A200247679). La quantité de titane sous forme de $TiO_2$ à introduire dans le verre demeure élevée, de 0,7 à 2,3 %.

Ces verres ne sont pas avantageux d'un point de vue économique car le titane est un composé onéreux qui contribue pour une part importante au prix de revient de la composition. En outre, le titane confère au vitrage une coloration jaune souvent non désirée.

Il a encore été décrit des verres à faible teneur en sélénium qui combinent du fer, du cobalt et du nickel.

Dans EP-A-825 156 et US-A-2003/50175, les verres proposés présentent une teneur en fer élevée, variant respectivement de 1,2 à 2,2 % et de 0,95 à 1,2%. La forte teneur en fer, en particulier sous forme FeO, entraîne une diminution des transferts thermiques dans le bain de verre se traduisant par une moins bonne efficacité de chauffage du verre dans le four. Avec des fours à brûleurs aériens, on pallie cette diminution importante de la température par exemple en disposant des électrodes sur la sole.

Dans WO-A-01/58820, la faible teneur en fer (0,25 à 0,65 %) permet d'obtenir des verres à coloration très neutre, mais peu sélectifs.

Enfin, dans EP-A- 653 388, il est décrit des verres contenant du fer, du cobalt et du nickel, et éventuellement du sélénium. La teneur en fer varie de 0,15 à 1,2 %. D'après les exemples, de faibles teneurs en sélénium sont associées à des teneurs en fer peu élevées, inférieures à 0,5%, ce qui confère au verre une transmission énergétique importante.

La présente invention a pour but de proposer une composition de verre silico-sodo-calcique de couleur gris foncé, exempte de sélénium, pouvant être utilisée pour former des vitrages, en particulier des vitrages « privacy » pour l'automobile, cette composition ayant des propriétés optiques similaires à celles des compositions connues renfermant du sélénium et/ou du titane.

Un autre but de l'invention est d'obtenir une composition de verre dénuée de sélénium et de titane qui puisse être mise en oeuvre dans les conditions du procédé « float ».

Ces buts sont atteints selon la présente invention par la composition de verre qui comprend une partie colorante constituée essentiellement des composés ci-après dans une teneur variant dans les limites pondérales suivantes :

| | |
|---|---|
| $Fe_2O_3$ (fer total) | 0,7 à 0,95 % |
| CoO | 50 à 80 ppm |
| NiO | 400 à 700 ppm |

ou

| | |
|---|---|
| $Fe_2O_3$ (fer total) | 0,7 à 0,95 % |
| CoO | 200 à 300 ppm |
| NiO | 1500 à 1900 ppm |

ladite composition étant dépourvue de sélénium et contenant moins de 0,5 % d'oxyde de titane, présentant un redox inférieur ou égal à 0,40, et le verre présentant un facteur de transmission lumineuse sous illuminant A ($TL_A$) inférieur ou égal à 50 % et un facteur de transmission énergétique global ($T_E$) inférieur à 45 %, mesurés pour une épaisseur de 3,85 mm.

Comme indiqué précédemment, les verres entrant dans le cadre de la présente invention sont des verres gris c'est-à-dire qui présentent une courbe de transmission qui ne varie pratiquement pas en fonction de la longueur d'onde visible.

Dans le système C.I.E. (Commission Internationale de l'Eclairage), les corps gris ne possèdent pas de longueur d'onde dominante et leur pureté d'excitation est nulle. Par extension, il est généralement admis comme gris tout corps dont la courbe est relativement plate dans le domaine visible mais qui présente néanmoins des bandes d'absorption faibles permettant de définir une longueur d'onde dominante et une pureté faible mais non nulle.

Les verres gris conformes à l'invention sont définis par la suite par leurs coordonnées chromatiques L*, a* et b* mesurées sous l'illuminant standard D65 défini par la C.I.E. qui représente la lumière du jour moyenne ayant une température de couleur de 6500 K permettant d'évaluer les propriétés optiques de vitrages destinées à l'automobile ayant une épaisseur de 3,85 mm. Les verres selon l'invention sont définis comme suit :

L* varie de 30 à 80
a* varie de -15 à 0
b* varie de -20 à 25

L'utilisation des agents colorants précités dans les limites de l'invention permet de conférer la coloration gris foncé recherchée et aussi d'ajuster au mieux les propriétés optiques et énergétiques du verre.

L'action des colorants pris individuellement est en général bien décrite dans la littérature.

La présence de fer dans une composition de verre peut résulter des matières premières, en tant qu'impuretés, ou d'un ajout délibéré visant à colorer le verre. Il est connu que le fer existe sous la forme d'ions ferriques ($Fe^{3+}$) et d'ions ferreux ($Fe^{2+}$). La présence d'ions $Fe^{3+}$ confère au verre une légère coloration jaune et permet d'absorber les radiations ultraviolettes. La présence d'ions $Fe^{2+}$ donne au verre une coloration bleu-vert plus prononcée et induit une absorption du rayonnement infrarouge. L'augmentation de la teneur en fer sous ses deux formes accentue l'absorption des radiations aux extrémités du spectre visible, cet effet se faisant au détriment de la transmission lumineuse. Inversement, en réduisant la proportion de fer, en particulier sous forme $Fe^{2+}$, on dégrade les performances en termes de transmission énergétique alors que la transmission lumineuse augmente.

Dans la présente invention, la teneur en fer total dans la composition est comprise entre 0,70 et 0,95 %, de préférence entre 0,80 et 0,95%. Une teneur en fer inférieure à 0,70 % ne permet pas d'atteindre les performances visées, notamment parce que les valeurs de $TL_A$ et de TE sont trop élevées (ou la sélectivité dans l'infrarouge est trop faible). Au-delà de 0,95 % en fer, les conditions de fusion de la composition de verre deviennent difficiles du fait de la teneur élevée en FeO qui limite les transferts de chaleur.

La teneur en fer relativement modérée utilisée dans les compositions selon l'invention permet, tout en conférant une faible transmission énergétique, d'avoir une valeur de a* pas trop élevée, souvent proche de zéro, qui donne au verre une nuance pas trop verte. En particulier, lorsque le verre est destiné à être trempé thermiquement il est intéressant d'avoir une valeur de a* supérieure à - 12 car celle-ci tend à se rapprocher de 0 après la trempe, ce qui signifie que le verre devient plus neutre.

Le cobalt produit une coloration bleue intense et entraîne aussi une diminution de la transmission lumineuse. Sa quantité dans le verre doit être parfaitement contrôlée pour rendre la transmission lumineuse compatible avec l'usage auquel on destine le verre. Conformément à l'invention, la teneur en oxyde de cobalt varie de 50 à 80 ppm ou de 200 à 300 ppm.

L'oxyde de nickel confère au verre une coloration brune. Dans la présente invention, on limite la teneur en oxyde de nickel afin d'éviter qu'il puisse se combiner avec des composés soufrés venant des matières premières ou d'autres composés ajoutés volontairement (notamment du sulfate en tant qu'agent d'affinage) en formant des billes de sulfure de nickel. Il est en effet connu que la phase « haute température » du sulfure de nickel qui se trouve « figée » lors de la trempe thermique peut se transformer progressivement en une phase « basse température » dont la taille plus importante génère des contraintes mécaniques qui font éclater le verre d'où un risque d'accident. Ainsi, la teneur en oxyde de nickel n'excède pas 1900 ppm pour des raisons liées notamment à la trempe comme cela est indiqué dans la suite du texte. Conformément à l'invention, la teneur en oxyde de nickel varie de 400 à 700 ppm ou de 1500 à 1900 ppm selon la teneur en oxyde de cobalt. En règle générale, il est difficile de prévoir les propriétés optiques et énergétiques d'un verre lorsque celui-ci contient plusieurs agents colorants. Ces propriétés résultent en effet d'une interaction complexe entre les différents agents dont le comportement est directement lié à leur état d'oxydation ainsi qu'aux traitements ultérieurs (trempe, recuisson...) que le verre peut être amené à subir.

Dans la présente invention, le choix des colorants, de leur teneur et de leur état d'oxydoréduction est déterminant pour l'obtention de la coloration gris foncé visée et des propriétés optiques.

Le redox défini par le rapport de la teneur pondérale en oxyde ferreux (exprimé en FeO) à la teneur pondérale en fer total (exprimé en $Fe_2O_3$) est généralement maintenu égal ou inférieur à 0,40 et de préférence égal ou inférieur à 0,30 pour des raisons liées essentiellement à la fusion et à l'affinage du verre.

Le redox est généralement contrôlé à l'aide d'agents oxydants tels que le sulfate de sodium, et d'agents réducteurs tels que du coke ou de la calumite, dont les teneurs relatives sont ajustées pour obtenir le rédox souhaité.

La composition selon l'invention peut en outre contenir moins de 1 %, de préférence moins de 0,5 %, d'autres agents colorants que le fer, le cobalt et le nickel, choisis parmi l'oxyde de cuivre, de l'oxyde de chrome, l'oxyde de vanadium et leurs mélanges.

L'oxyde de titane donne au verre une nuance jaune et entraîne une réduction de la transmission des radiations ultraviolettes en interagissant avec l'oxyde ferreux. Par conséquent, sa teneur est maintenue à une valeur inférieure à 0,5 %, de préférence inférieure 0,3 %. De manière avantageuse, les verres selon l'invention ne contiennent pas d'oxyde de titane autre que celui apporté en tant qu'impureté par les matières premières, correspondant à une teneur inférieure à 0,2 %, voire 0,1 %, et même 0,05 %.

De manière préférée, la composition de verre selon l'invention ne comprend aucun agent colorant autre que le fer, le cobalt et le nickel.

La composition selon l'invention permet d'obtenir un verre possédant un facteur de transmission lumineuse globale $TL_A$ inférieure ou égale à 50 %, de préférence inférieure à 40 %, et mieux encore supérieure à 5 %

Conformément à l'invention, les verres présentent un facteur de transmission énergétique globale $T_E$ inférieur à 45 %, de préférence inférieur à 30 %.

Une première série de compositions de verre préférées selon l'invention comprend une partie colorante constituée essentiellement des composés ci-après, dans les limites pondérales suivantes :

| | |
|---|---|
| $Fe_2O_3$ (fer total) | 0,80 à 0,95% |
| CoO | 50 à 80 ppm |
| NiO | 400 à 700 ppm |
| Redox | 0,20 à 0,30. |

Ces compositions permettent d'obtenir des verres ayant une valeur de $TL_A$, de l'ordre de 30 à 45 %. De tels verres procurent un sentiment d'intimité et de sécurité aux occupants de véhicules automobiles qui en sont équipés.

Une autre série de compositions de verre préférées selon l'invention comprend une partie colorante constituée essentiellement des composés ci-après, dans les limites pondérales suivantes :

| | |
|---|---|
| $Fe_2O_3$ (fer total) | 0,80 à 0,95% |

(suite)

| | |
|---|---|
| CoO | 200 à 300 ppm |
| NiO | 1500 à 1900 ppm |
| Redox | 0,20 à 0,30 |

Ces compositions permettent d'obtenir des verres ayant une valeur de $TL_A$ plus faible, de l'ordre de 6 à 12 %. Ces verres fortement teintés peuvent être employés par exemple comme toits automobiles.

L'expression silico-sodo-calcique est ici utilisée dans le sens large et concerne toute composition de verre constituée d'une matrice verrière qui comprend les constituants suivants (en pourcentage en poids).

| | |
|---|---|
| $SiO_2$ | 64 - 75 % |
| $Al_2O_3$ | 0 - 5 % |
| $B_2O_3$ | 0 - 5 % |
| CaO | 5-15% |
| MgO | 0-10% |
| $Na_2O$ | 10-18% |
| $K_2O$ | 0-5% |
| BaO | 0-5% |

On convient ici que la composition de verre silico-sodo-calcique peut comprendre, outre les impuretés inévitables contenues notamment dans les matières premières, une faible proportion (jusqu'à 1 %) d'autres constituants, par exemple des agents aidant à la fusion ou l'affinage du verre ($SO_3$, Cl, $Sb_2O_3$, $As_2O_3$) ou provenant d'un ajout éventuel de calcin recyclé dans le mélange vitrifiable.

Dans les verres selon l'invention, la silice est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 64 %, la résistance hydrolytique du verre décroît rapidement et la transmission dans le visible diminue également.

Les oxydes alcalins $Na_2O$ et $K_2O$ facilitent la fusion du verre et permettent d'ajuster sa viscosité aux températures élevées afin de le maintenir proche de celle d'un verre standard. $K_2O$ peut être utilisé jusqu'à 5 % car au-delà se pose le problème du coût élevé de la composition. Par ailleurs, l'augmentation du pourcentage de $K_2O$ ne peut se faire, pour l'essentiel, qu'au détriment de $Na_2O$ ce qui contribue à augmenter la viscosité. La somme des teneurs en $Na_2O$ et $K_2O$, exprimées en pourcentages pondéraux, est de préférence égale ou supérieure à 10 % et avantageusement inférieure à 20 %. Si la somme de ces teneurs est supérieure à 20 % ou si la teneur en $Na_2O$ est supérieure à 18 %, la résistance hydrolytique est fortement réduite.

Les oxydes alcalino-terreux permettent d'adapter la viscosité du verre aux conditions d'élaboration.

MgO peut être utilisé jusqu'à 10 % environ et sa suppression peut être compensée, au moins en partie, par une augmentation de la teneur en $Na_2O$ et/ou $SiO_2$. De préférence, la teneur en MgO est inférieure à 5 % et de manière particulièrement avantageuse est inférieure à 2 % ce qui a pour effet d'augmenter la capacité d'absorption dans l'infrarouge sans nuire à la transmission dans le visible.

BaO permet d'augmenter la transmission lumineuse et il peut être ajouté dans la composition dans une teneur inférieure à 5 %.

BaO a une influence beaucoup plus faible que CaO et MgO sur la viscosité du verre et l'augmentation de sa teneur se fait essentiellement au détriment des oxydes alcalins, de MgO et surtout de CaO. Toute augmentation de BaO contribue à augmenter la viscosité du verre aux basses températures. De manière préférée, les verres selon l'invention sont exempts de BaO.

Outre le respect des limites définies précédemment pour la variation de la teneur de chaque oxyde alcalino-terreux, il est préférable pour obtenir les propriétés de transmission recherchées de limiter la somme des pourcentages pondéraux de MgO, CaO et BaO à une valeur égale ou inférieure à 15 %.

La composition selon l'invention peut en outre comprendre des additifs par exemple des agents modifiant les propriétés optiques dans certaines parties du spectre, notamment dans le domaine de l'ultraviolet, tels que $CeO_2$, $WO_3$ et $La_2O_3$. La teneur totale en ces additifs n'excède généralement pas 2 % en poids de la composition, et de préférence n'excède pas 1 %.

La composition de verre conforme à l'invention est apte à être fondue dans les conditions de production du verre flotté ou du verre laminé. La fusion a généralement lieu dans des fours à flamme, éventuellement pourvus d'électrodes assurant le chauffage du verre dans la masse par passage du courant électrique entre les deux électrodes. Pour faciliter la fusion, et notamment rendre celle-ci mécaniquement intéressante, la composition de verre présente avantageusement une température correspondant à une viscosité $\eta$ telle que $\log \eta = 2$ qui est inférieure à 1500°C. De préférence encore, la température correspondant à la viscosité $\eta$ telle que $\log \eta = 3,5$ (notée T($\log \eta = 3,5$)) et la température au liquidus (notée $T_{liq}$) satisfont la relation :

$$T(\log \eta = 3,5) - T_{liq} > 20°C$$

et mieux encore :

$$T(\log \eta = 3,5) - T_{liq} > 50°C$$

L'épaisseur de la feuille de verre formée varie généralement entre 1 et 19 mm.

Dans le procédé « float », l'épaisseur du ruban obtenu par nappage du verre en fusion sur le bain d'étain varie de préférence entre 1 et 5 mm pour les vitrages automobiles et entre 3 et 10 mm pour les vitrages destinés au bâtiment.

Par laminage, l'épaisseur du verre varie préférentiellement entre 4 et 10 mm.

La feuille de verre obtenue par la découpe du ruban de verre peut subir ultérieurement une opération de bombage et/ou de trempe.

La trempe thermique et une opération bien connue qui consiste à porter la feuille de verre à une température de l'ordre de 600 à 700°C pendant une durée n'excédant généralement pas quelques minutes et à la refroidir brutalement, par exemple par des jets d'air sous pression.

La feuille de verre trempée obtenue à partir de la composition selon l'invention est remarquable en ce qu'elle présente une coloration gris foncé caractérisée notamment par une valeur de a* variant de -10 à 0 et une valeur de b* variant de -20 à + 15, de préférence de -5 à + 5.

Il est possible de moduler la coloration gris foncé du vitrage trempé pour lui conférer une nuance allant du bleu au bronze en ajustant les quantités relatives des agents colorants.

Si l'on définit le rapport R comme suit :

$$R = [(300 \times Fe_2O_3) + NiO] / [(1200 \times FeO) + (5 \times CoO)]$$

dans lequel les teneurs en $Fe_2O_3$ et FeO sont exprimées en pourcentage pondéral et les teneurs en NiO et CoO sont exprimées en ppm ($Fe_2O_3$ représentant dans cette formule la teneur en fer ferrique). On peut obtenir un verre présentant une nuance bronze lorsque le rapport R est supérieur à environ 2,2 et une nuance bleutée lorsque le rapport est inférieur à 0,6. Lorsque la valeur de R est comprise entre ces limites, de préférence entre 0,8 et 1,5, le verre possède une teinte neutre particulièrement avantageuse.

Dans les conditions de la trempe thermique, la variation de la couleur du verre est réglée par la teneur relative en NiO. Il a été trouvé que dans le verre trempé, l'environnement chimique du nickel est modifié ce qui lui confère des propriétés d'absorption différentes. In en résulte une augmentation de la valeur de a* et une diminution de celle de b* et par conséquent un déplacement de la coloration du vitrage vers des teintes plus neutres. Ces variations sont d'autant plus fortes que la teneur en NiO est élevée.

La feuille de verre obtenue peut également subir d'autres opérations de traitement ultérieures, par exemple visant à la revêtir d'une ou plusieurs couches d'oxydes métalliques en vue de réduire son échauffement par le rayonnement solaire.

La feuille de verre, éventuellement trempée, peut être utilisée telle quelle ou être associée à une autre feuille de verre pour former un vitrage feuilleté pour l'automobile ou le bâtiment.

Les exemples de compositions de verre données ci-après permettent de mieux apprécier les avantages liés à la présente invention.

Dans ces exemples, on indique les valeurs des propriétés suivantes calculées à partir de spectres expérimentaux pour une épaisseur de verre de 3,85 mm :

- le facteur de transmission lumineuse globale sous illuminant A ($TL_A$), ainsi que les coordonnées chromatiques L*, a* et b* sous illuminant D65, intégrés entre 380 et 780nm. Ces calculs sont effectués en prenant l'observateur de référence colorimétrique C.I.E. 1931.

- le facteur de transmission énergétique globale ($T_E$) intégré entre 295 et 2500 nm selon la norme ISO 9050 (PARRY MOON Masse d'air 2)
- le redox, défini comme étant le rapport de la teneur massique en fer ferreux (exprimé en FeO) sur la teneur massique en fer total (exprimé en $Fe_2O_3$). La teneur en fer total est mesurée par fluorescence X et la teneur en fer ferreux est mesurée par chimie utilisant la voie humide.

Chacune des compositions figurant dans le tableau 1 est réalisée à partir de la matrice verrière suivante, dont les teneurs sont exprimées en pourcentages pondéraux, celle-ci étant corrigée au niveau de la silice pour s'adapter à la teneur totale en agents colorants ajoutés.

| | |
|---|---|
| $SiO_2$ | 71 % |
| $Al_2O_3$ | 0,70% |
| CaO | 8,90 % |
| MgO | 3,80 % |
| $Na_2O$ | 14,10 % |
| $K_2O$ | 0,10 % |

Le verre obtenu est trempé thermiquement par chauffage dans un four à 600-700°C pendant 1 à 3 minutes, puis refroidissement par des buses à air sous une pression de 1 bar ( 0,1 MPa) pendant 1 minute.

Tous les verres conformes à l'invention (exemples 1 à 13) sont caractérisés par un facteur de transmission lumineuse globale ($TL_A$) compris entre 5 et 50 %, et une coloration gris foncé comparables à celles que l'on obtient avec un verre contenant du sélénium et/ou du titane.

En particulier, les verres des exemples 1 et 2 sont respectivement très similaires en termes de transmission lumineuse et de couleur aux verres connus des exemples A et B (comparatifs) utilisés pour des vitrages automobiles alors que ces deux derniers comportent des teneurs notables en sélénium, respectivement de 10 et 30 ppm.

Les exemples 1, 7, et 9 à 13 illustrent un premier mode de réalisation de l'invention, dans lequel les teneurs en CoO et NiO varient respectivement de 50 à 80 ppm et de 400 à 700 ppm. Ces verres présentent après trempe thermique des facteurs de transmission lumineuse de l'ordre de 30 à 45%, ce qui permet leur utilisation en tant que vitres latérales ou lunettes arrières d'automobile, ou en tant que vitrages pour bâtiment.

Les exemples 2 à 6 illustrent un second mode de réalisation préféré de l'invention, pour lequel les teneurs en CoO et NiO varient respectivement de 200 à 300 ppm et de 1500 à 1900 ppm, permettant ainsi d'obtenir après trempe thermique des verres présentant des facteurs de transmission lumineuse de l'ordre de 6 à 12%. Du fait de ces faibles valeurs de transmission, ces verres sont plus particulièrement destinés à la réalisation de toits pour l'automobile.

## Tableau 1

| Exemple | A | B | 1 | 2 | 3 | 4 | 5 | 6 | 7 | 8 | 9 |
|---|---|---|---|---|---|---|---|---|---|---|---|
| $Fe_2O_3$ (%) | 1,30 | 1,80 | 0,90 | 0,94 | 0,85 | 0,90 | 0,81 | 0,83 | 0,94 | 0,89 | 0,94 |
| Redox | 0,23 | 0,24 | 0,27 | 0,26 | 0,21 | 0,28 | 0,22 | 0,28 | 0,30 | 0,33 | 0,25 |
| CoO (ppm) | 90 | 300 | 70 | 230 | 290 | 300 | 280 | 250 | 76 | 60 | 52 |
| NiO (ppm) | 0 | 0 | 590 | 1590 | 1900 | 1780 | 1790 | 1650 | 690 | 530 | 690 |
| $R^{(+)}$ | | | 1,21 | 1,24 | 1,26 | 1,09 | 1,20 | 1,19 | 1,22 | 1,07 | 1,64 |
| $Cr_2O_3$ (ppm) | 0 | 100 | | | | | | | | | |
| Se (ppm) | 10 | 30 | | | | | | | | | |
| *Après la trempe* | | | | | | | | | | | |
| $TL_A$ (%) | 35,0 | 10,0 | 35,8 | 10,2 | 6,8 | 6,7 | 7,5 | 8,9 | 31,1 | 36,8 | 35,1 |
| $T_E$ | 22,0 | 8,2 | 27,4 | 15,1 | 16,3 | 12,6 | 15,6 | 14,7 | 22,7 | 24,9 | 26,5 |
| L* | 66,3 | 38,0 | 66,9 | 38,4 | 31,6 | 31,7 | 33,3 | 36,3 | 63,2 | 68,0 | 66,2 |
| a* | - 7,5 | - 4,3 | - 7,3 | - 4,0 | - 2,2 | - 3,2 | - 2,6 | - 3,6 | - 8,3 | - 9,0 | - 7,4 |
| b* | 2,9 | 1,3 | 3,0 | 1,3 | - 1,6 | - 4,2 | - 2,5 | - 2,0 | 2,4 | 0,9 | 6,6 |
| *Avant la trempe* | | | | | | | | | | | |
| $TL_A$ (%) | | | 38,7 | 12,3 | 8,9 | 8,7 | 9,7 | 11,3 | 34,4 | 39,7 | 38,8 |
| $T_E$ | | | 28,0 | 15,4 | 17,1 | 13,3 | 16,5 | 15,6 | 23,9 | 25,9 | 27,6 |
| L* | | | 69,1 | 42,2 | 36,1 | 35,9 | 37,7 | 40,6 | 65,9 | 70,1 | 68,9 |
| a* | | | - 9,8 | - 8,4 | - 6,6 | - 7,9 | - 7,1 | - 8,0 | - 10,7 | - 10,9 | - 9,5 |
| b* | | | 5,6 | 6,2 | 5,7 | 2,6 | 4,6 | 4,8 | 6,3 | 4,0 | 10,6 |

$R^{(+)} = [(300 \times Fe_2O_3) + NiO] / [(1200 \times FeO) + (5 \times CoO)]$

**Tableau 1 (suite)**

| Exemple | A | B | 10 | 11 | 12 | 13 |
|---|---|---|---|---|---|---|
| $Fe_2O_3$ (%) | 1,30 | 1,80 | 0,82 | 0,80 | 0,70 | 0,75 |
| Redox | 0,23 | 0,24 | 0,24 | 0,28 | 0,17 | 0,20 |
| CoO (ppm) | 90 | 300 | 65 | 50 | 70 | 60 |
| NiO (ppm) | 0 | 0 | 610 | 550 | 520 | 520 |
| $R^{(+)}$ | | | 1,40 | 1,39 | 1,40 | 1,45 |
| $Cr_2O_3$ (ppm) | 0 | 100 | | | | |
| Se (ppm) | 10 | 30 | | | | |
| *Après la trempe* | | | | | | |
| $TL_A$ (%) | 35,0 | 10,0 | 37,2 | 40,4 | 42,2 | 42,5 |
| $T_E$ | 22,0 | 8,2 | 30,6 | 30,6 | 41,3 | 37,7 |
| $L^*$ | 66,3 | 38,0 | 67,9 | 70,2 | 71,3 | 71,5 |
| $a^*$ | -7,5 | -4,3 | -6,5 | -7,1 | -4,6 | -5,5 |
| $b^*$ | 2,9 | 1,3 | 3,6 | 3,7 | 2,5 | 3,4 |
| *Avant la trempe* | | | | | | |
| $TL_A$ (%) | | | 40,6 | 43,7 | 45,5 | 45,8 |
| $T_E$ | | | 31,7 | 31,7 | 42,4 | 38,8 |
| $L^*$ | | | 70,3 | 72,5 | 73,5 | 73,7 |
| $a^*$ | | | -8,6 | -9,0 | -6,4 | -7,2 |
| $b^*$ | | | 7,2 | 7,1 | 5,8 | 6,7 |

$$R^{(+)} = [(300 \times Fe_2O_3) + NiO] / [(1200 \times FeO) + (5 \times CoO)]$$

## Revendications

**1.** Composition de verre gris silico-sodo-calcique, **caractérisée en ce qu'**elle comprend une partie colorante constituée essentiellement des composés ci-après dans une teneur variant dans les limites pondérales suivantes :

| | |
|---|---|
| $Fe_2O_3$ (fer total) | 0,7 à 0,95 % |
| CoO | 50 à 80 ppm |
| NiO | 400 à 700 ppm |

ou

| | |
|---|---|
| $Fe_2O_3$ (fer total) | 0,7 à 0,95 % |
| CoO | 200 à 300 ppm |
| NiO | 1500 à 1900 ppm |

ladite composition étant dépourvue de sélénium et contenant moins de 0,5 % d'oxyde de titane, présentant un redox inférieur ou égal à 0,40, et le verre présentant un facteur de transmission lumineuse sous illuminant A ($TL_A$) inférieur ou égal à 50 % et un facteur de transmission énergétique global ($T_E$) inférieur à 45 %, mesurés pour une épaisseur de 3,85 mm.

**2.** Composition selon la revendication 1, **caractérisée en ce que** le redox est inférieur ou égal à 0,30.

**3.** Composition selon l'une des revendications 1 ou 2, **caractérisée en ce que** le facteur de transmission lumineuse sous illuminant A $TL_A$ est supérieur à 5 %.

4. Composition selon l'une des revendications 1 à 3, **caractérisée en ce que** le facteur de transmission énergétique globale $T_E$ est inférieur à 30 %.

5. Composition selon l'une des revendications 1 à 4, **caractérisée en ce qu'**elle comprend en outre moins de 1 %, de préférence moins de 0,5 %, d'agents colorants choisis parmi l'oxyde de cuivre, l'oxyde de chrome, l'oxyde de vanadium et leurs mélanges.

6. Composition selon la revendication 1, **caractérisée en ce que** la teneur en oxyde de titane est inférieure à 0,3 %.

7. Composition selon l'une des revendications 1 à 6, **caractérisée en ce qu'**elle comprend à titre d'agents colorants :

| | |
|---|---|
| $Fe_2O_3$ (fer total) | 0,80 à 0,95% |
| CoO | 50 à 80 ppm |
| NiO | 400 à 700 ppm |
| Redox | 0,20 à 0,30 |

le verre présentant un facteur de transmission lumineuse sous illuminant A ($TL_A$) de l'ordre de 30 à 45 %.

8. Composition selon l'une des revendications 1 à 6, **caractérisée en ce qu'**elle comprend à titre d'agents colorants :

| | |
|---|---|
| $Fe_2O_3$ (fer total) | 0,80 à 0,95% |
| CoO | 200 à 300 ppm |
| NiO | 1500 à 1900 ppm |
| Redox | 0,20 à 0,30 |

le verre présentant un facteur de transmission lumineuse sous illuminant A ($TL_A$) de l'ordre de 6 à 12 %.

9. Composition selon l'une des revendications 1 à 8, **caractérisée en ce qu'**elle est constituée d'une matrice verrière comprenant les constituants suivants (en pourcentage en poids) :

| | |
|---|---|
| $SiO_2$ | 64 - 75 % |
| $Al_2O_3$ | 0 - 5 % |
| $B_2O_3$ | 0 - 5 % |
| CaO | 5-15% |
| MgO | 0 - 10 % |
| $Na_2O$ | 10-18% |
| $K_2O$ | 0-5% |
| BaO | 0 - 5 % |

10. Feuille de verre formée par flottage sur un bain de métal fondu, de composition chimique telle que définie par l'une quelconque des revendications 1 à 9.

11. Feuille de verre selon la revendication 10, **caractérisée en ce qu'**elle présente les coordonnées chromatiques suivantes mesurées sous illuminant $D_{65}$ pour une épaisseur de 3,85 mm :

L* varie de 30 à 80
a* varie de -15 à 0
b* varie de -20 à 25

12. Feuille de verre trempée thermiquement de composition selon l'une quelconque des revendications 1 à 9 et présentant les coordonnées chromatiques suivantes mesurées sous illuminant $D_{65}$ pour une épaisseur de 3,85 mm :

a* varie de - 10 à 0

b* varie de - 20 à + 15, de préférence - 5 à + 5.

13. Feuille de verre selon l'une des revendications 10 à 12, **caractérisée en ce qu'**elle comprend en outre au moins une couche d'au moins un oxyde métallique permettant de réfléchir le rayonnement infrarouge.

14. Vitrage, notamment automobile, **caractérisé en ce qu'**il comprend au moins une feuille de verre selon l'une des revendications 10 à 13.

**Claims**

1. A gray soda-lime silicate glass composition, **characterized in that** it includes a coloring part essentially consisting of the compounds below in contents varying within the following weight limits:

$Fe_2O_3$ (total iron)　0.7 to 0.95%
CoO　　　　　　　50 to 80 ppm
NiO　　　　　　　400 to 700 ppm

or

$Fe_2O_3$ (total iron)　0.7 to 0.95%
CoO　　　　　　　200 to 300 ppm
NiO　　　　　　　1500 to 1900 ppm

said composition being free of selenium and containing less than 0.5% of titanium oxide, having a redox of 0.40 or less, and the glass having a light transmission factor ($T_{LA}$) under illuminant A of 50% or less and an overall energy transmission factor ($T_E$) of less than 45%, these being measured for a thickness of 3.85 mm.

2. The composition as claimed in claim 1, **characterized in that** the redox is equal to or less than 0.30.

3. The composition as claimed in either of claims 1 or 2, **characterized in that** the light transmission factor under illuminant A, $T_{LA}$, is greater than 5%.

4. The composition as claimed in one of claims 1 to 3, **characterized in that** the overall energy transmission factor $T_E$ is less than 30%.

5. The composition as claimed in one of claims 1 to 4, **characterized in that** it furthermore includes less than 1%, preferably less than 0.5%, of coloring agents chosen from copper oxide, chromium oxide, vanadium oxide and mixtures thereof.

6. The composition as claimed in claim 1, **characterized in that** the titanium oxide content is less than 0.3%.

7. The composition as claimed in one of claims 1 to 6, **characterized in that** it includes, as coloring agents:

$Fe_2O_3$ (total iron)　0.80 to 0.95%
CoO　　　　　　　50 to 80 ppm
NiO　　　　　　　400 to 700 ppm
Redox　　　　　　0.20 to 0.30

the glass having a light transmission factor under illuminant A ($T_{LA}$) of around 30 to 45%.

8. The composition as claimed in one of claims 1 to 6, **characterized in that** it includes, as coloring agents:

$Fe_2O_3$ (total iron)　0.80 to 0.95%

(continued)

| | |
|---|---|
| CoO | 200 to 300 ppm |
| NiO | 1500 to 1900 ppm |
| Redox | 0.20 to 0.30 |

the glass having a light transmission factor under illuminant A ($T_{LA}$) of around 6 to 12%.

9. The composition as claimed in one of claims 1 to 8, **characterized in that** it consists of a glass matrix comprising the following constituents (in percentages by weight):

| | |
|---|---|
| $SiO_2$ | 64 - 75% |
| $Al_2O_3$ | 0 - 5% |
| $B_2O_3$ | 0 - 5% |
| CaO | 5 - 15% |
| MgO | 0 - 10% |
| $Na_2O$ | 10 - 18% |
| $K_2O$ | 0 - 5% |
| BaO | 0 - 5%. |

10. A glass sheet formed by the float process on a bath of molten metal, with a chemical composition as defined by any one of claims 1 to 9.

11. The glass sheet as claimed in claim 10, **characterized in that** it has the following chromatic coordinates measured under illuminant $D_{65}$, for a thickness of 3.85 mm:

L* varies from 30 to 80
a* varies from -15 to 0
b* varies from -20 to 25.

12. A thermally toughened glass sheet with the composition as claimed in any one of claims 1 to 9 and having the following chromatic coordinates measured under illuminant $D_{65}$, for a thickness of 3.85 mm:

a* varies from -10 to 0
b* varies from -20 to +15, preferably from -5 to +5.

13. The glass sheet as claimed in one of claims 10 to 12, **characterized in that** it furthermore includes at least one layer of at least one metal oxide for reflecting infrared radiation.

14. A window, especially an automobile window, **characterized in that** it comprises at least one glass sheet as claimed in one of claims 10 to 13.

**Patentansprüche**

1. Kalk-Natron-Silicat-Grauglaszusammensetzung, **dadurch gekennzeichnet, dass** sie einen farbgebenden Teil umfasst, der im Wesentlichen aus folgenden Verbindungen mit einem Gehalt besteht, der innerhalb nachstehender Gewichtsgrenzen variiert:

| | | | | |
|---|---|---|---|---|
| $Fe_2O_3$ (Gesamteisen) | 0,7 | bis | 0,95 % | |
| CoO | 50 | bis | 80 | ppm |
| NiO | 400 | bis | 700 | ppm |

oder

| | | | | |
|---|---|---|---|---|
| $Fe_2O_3$ (Gesamteisen) | 0,7 | bis | 0,95 % | |
| CoO | 200 | bis | 300 | ppm |
| NiO | 1500 | bis | 1900 | ppm, |

wobei diese Zusammensetzung selenfrei ist, weniger als 0,5 % Titanoxid enthält und einen Redoxgrad von unter oder gleich 0,40 aufweist und das Glas einen Lichttransmissionsgrad für Normlichtart A ($T_{LA}$) von unter oder gleich 50 % und einen globalen Strahlungstransmissionsgrad ($T_E$) von unter 45 %, gemessen bei einer Dicke von 3,85 mm, aufweist.

2. Zusammensetzung nach Anspruch 1, **dadurch gekennzeichnet, dass** der Redoxgrad weniger als oder gleich 0,30 beträgt.

3. Zusammensetzung nach Anspruch 1 oder 2, **dadurch gekennzeichnet, dass** der Lichttransmissionsgrad $T_{LA}$ für Normlichtart A mehr als 5 % beträgt.

4. Zusammensetzung nach einem der Ansprüche 1 bis 3, **dadurch gekennzeichnet, dass** der globale Strahlungstransmissionsgrad $T_E$ weniger als 30 % beträgt.

5. Zusammensetzung nach einem der Ansprüche 1 bis 4, **dadurch gekennzeichnet, dass** sie außerdem weniger als 1 % und vorzugsweise weniger als 0,5 % Farbmittel enthält, die aus Kupferoxid, Chromoxid, Vanadiumoxid und deren Gemischen ausgewählt sind.

6. Zusammensetzung nach Anspruch 1, **dadurch gekennzeichnet, dass** der Titanoxidgehalt weniger als 0,3 % beträgt.

7. Zusammensetzung nach einem der Ansprüche 1 bis 6, **dadurch gekennzeichnet, dass** sie als Farbmittel umfasst:

| | | | | |
|---|---|---|---|---|
| $Fe_2O_3$ (Gesamteisen) | 0,80 | bis | 0,95 % | |
| CoO | 50 | bis | 80 | ppm |
| NiO | 400 | bis | 700 | ppm |
| Redoxgrad | 0,20 | bis | 0,30, | |

wobei das Glas einen Lichttransmissionsgrad ($T_{LA}$) für Normlichtart A von etwa 30 bis 45 % aufweist.

8. Zusammensetzung nach einem der Ansprüche 1 bis 6, **dadurch gekennzeichnet, dass** sie als Farbmittel umfasst:

| | | | | |
|---|---|---|---|---|
| $Fe_2O_3$ (Gesamteisen) | 0,80 | bis | 0,95 % | |
| CoO | 200 | bis | 300 | ppm |
| NiO | 1500 | bis | 1900 | ppm |
| Redoxgrad | 0,20 | bis | 0,30, | |

wobei das Glas einen Lichttransmissionsgrad ($T_{LA}$) für Normlichtart A von etwa 6 bis 12 % aufweist.

9. Zusammensetzung nach einem der Ansprüche 1 bis 8, **dadurch gekennzeichnet, dass** sie von einer Glasmatrix gebildet wird, die folgende Bestandteile (in Gewichtsprozent) umfasst:

| | | | |
|---|---|---|---|
| $SiO_2$ | 64 | bis | 75 % |
| $Al_2O_3$ | 0 | bis | 5 % |
| $B_2O_3$ | 0 | bis | 5 % |
| CaO | 5 | bis | 15 % |
| MgO | 0 | bis | 10 % |
| $Na_2O$ | 10 | bis | 18 % |
| $K_2O$ | 0 | bis | 5 % |

(fortgesetzt)

| | | | |
|---|---|---|---|
| BaO | 0 | bis | 5 %. |

**10.** Glasscheibe mit einer von einem der Ansprüche 1 bis 9 definierten chemischen Zusammensetzung, die durch einen Floatvorgang auf einem Metallschmelzbad gebildet worden ist.

**11.** Glasscheibe nach Anspruch 10, **dadurch gekennzeichnet, dass** sie folgende bei einer Dicke von 3,85 mm für Normlichtart $D_{65}$ gemessene Farbkoordinaten aufweist:

| | | | |
|---|---|---|---|
| L*: | 30 | bis | 80 |
| a*: | -15 | bis | 0 |
| b*: | -20 | bis | 25. |

**12.** Glasscheibe, die thermisch vorgespannt ist, eine Zusammensetzung nach einem der Ansprüche 1 bis 9 besitzt und folgende bei einer Dicke von 3,85 mm für Normlichtart $D_{65}$ gemessene Farbkoordinaten aufweist:

| | | | | |
|---|---|---|---|---|
| a*: | -10 | bis | 0 | |
| b*: | -20 | bis | +15 | und vorzugsweise -5 bis +5. |

**13.** Glasscheibe nach einem der Ansprüche 10 bis 12, **dadurch gekennzeichnet, dass** sie außerdem wenigstens eine Schicht aus mindestens einem Metalloxid, das es erlaubt, die Infrarotstrahlung zu reflektieren, umfasst.

**14.** Glas, insbesondere für Kraftfahrzeuge, **dadurch gekennzeichnet, dass** es mindestens eine Glasscheibe nach einem der Ansprüche 10 bis 13 umfasst.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 947476 A
- EP 1020414 A
- EP 1125899 A
- EP 842906 A
- EP 849233 A
- JP 00247679 A
- EP 825156 A
- US 200350175 A
- WO 0158820 A
- EP 653388 A